# EUROPEAN PATENT APPLICATION

(11) **EP 4 730 427 A1**
(43) Date of publication of application: **22.04.2026**
(21) Application number: 24863167.3
(22) Date of filing: 04.09.2024
(51) Int. Cl.: H01M 4/36, H01M 4/505, H01M 4/131, H01M 10/052, H01M 4/02

(54) **POSITIVE ELECTRODE ACTIVE MATERIAL AND LITHIUM SECONDARY BATTERY COMPRISING SAME**

(30) Priority: 07.09.2023 KR 20230119293
(71) Applicant: LG Energy Solution, Ltd., Seoul 07335 (KR)
(72) Inventor: LEE, Youshin, Daejeon 34122 (KR); PARK, Kang Joon, Daejeon 34122 (KR); LEE, Jaeyoung, Daejeon 34122 (KR); KIM, Minjeong, Daejeon 34122 (KR); PARK, Sin Young, Daejeon 34122 (KR); HAN, Gi Beom, Daejeon 34122 (KR)
(74) Representative: Hoffmann Eitle
(86) International application number: PCT/KR2024/013272
(87) International publication number: WO 2025/053586

(57) **Abstract**

The present invention relates to a positive electrode active material and a lithime secondary battery comprising the same, the positive electrode active material being capable of reducing the amount of gas generated in an activation process or the like of the lithium secondary battery, and further improving the energy density and discharge capacity characteristics of the lithium secondary battery. The positive electrode active material includes: a first phase containing a lithium manganese oxide with a rock salt structure; and a second phase containing a lithium metal oxide with a layered structure, in a mixed state. In the positive electrode active material, the content of manganese may account for about 50 mol% or more of the total content of metals contained in the positive electrode active material, excluding lithium, and niobium (Nb) which is additionally doped on the positive electrode active material may be further included in an amount of about 2,000 ppm to 9,500 ppm based on the total content of the positive electrode active material.

## Description

### CROSS-REFERENCE TO RELATED APPLICATIONS

This application is based on and claims priority from Korean Patent Application No. 10-2023-0119293, filed on September 7, 2023, with the Korean Intellectual Property Office, the disclosure of which is incorporated herein in its entirety by reference.

### TECHNICAL FIELD

The present disclosure relates to a positive electrode active material, which can reduce a gas generation amount during the activation process, and the like, of lithium secondary batteries, and exhibits improved energy density and discharge capacity characteristics, and a lithium secondary battery including the same.

### BACKGROUND

Recently, there is an increasing demand for secondary batteries with high capacity, high output, and high stability as the application area of lithium secondary batteries rapidly expands not only to the power supply for electronic devices such as electricity, electronics, communication, and computers but also to the power storage supply for large area devices such as automobiles and power storage devices.

The lithium secondary battery generally includes a positive electrode including a positive electrode active material, a negative electrode including a negative electrode active material, an electrolyte serving as a medium for transferring lithium ions, and a separator. Research has been steadily carried out to lower the manufacturing cost of these positive electrodes, negative electrodes, electrolytes and separators and to increase the energy density and capacity of lithium secondary batteries.

### SUMMARY

The present disclosure provides a manganese-rich oxide-based positive electrode active material, which has a high energy density, and also can reduce a gas generation amount during the activation process, and the like, of lithium secondary batteries, and exhibits improved discharge capacity characteristics.

The present disclosure also provides a positive electrode and a lithium secondary battery, in which the positive electrode active material is contained such that a reduced gas generation amount, and improved energy density and discharge capacity characteristics are exhibited.

### Technical means

The present disclosure provides a positive electrode active material including a first phase containing a lithium manganese oxide with a rock salt structure; and a second phase containing a lithium metal oxide of Formula 1 with a layered structure, in a mixed state. In the positive electrode active material, the content of manganese accounts for about 50 mol% or more of the total content of metals contained in the positive electrode active material, excluding lithium, and niobium (Nb) which is additionally doped on the positive electrode active material is further included in an amount of about 2,000 ppm to 9,500 ppm based on a total content of the positive electrode active material:

[Formula 1] Li[Ni_{1-b-c}Mn_{b}M_{c}]O₂

in which in Formula 1, b is 0.4 or more and less than 1, c is 0 to 0.2, and M is at least one selected from the group consisting of Al, B, W, Mg, V, Ti, Zn, Ga, In, Ru, Sn, Sr and Zr.

The present disclosure also provides a positive electrode for a lithium secondary battery. The positive electrode includes: a positive electrode current collector; and a positive electrode active material layer formed on the positive electrode current collector and containing the positive electrode active material, a binder and a conductive material.

Also, the present disclosure provides a lithium secondary battery including the positive electrode, a negative electrode, and anelectrolyte.

The lithium secondary battery may exhibit a reduced gas generation amount of about 2.9 mL or less when stored for two weeks under conditions of SOC (State of Charge) 100% and 60°C.

### Technical Effects

The positive electrode active material of the present disclosure is a manganese-rich oxide-based oxide, and does not contain cobalt in the structure, in which niobium (Nb) doped on the positive electrode active material is contained in a predetermined amount.

As a result of experiments by the present inventors, it was confirmed that this positive electrode active material exhibits a relatively high energy density which is unique to manganese-rich oxide types while exhibiting a reduced gas generation amount under activation conditions of lithium secondary batteries. Also, it was confirmed that it is possible to improve the discharge capacity characteristics of lithium secondary batteries, especially the discharge capacity characteristics under the relatively high temperatures, due to the coating of a predetermined content of niobium (Nb).

### BRIEF DESCRIPTION OF THE DRAWINGS

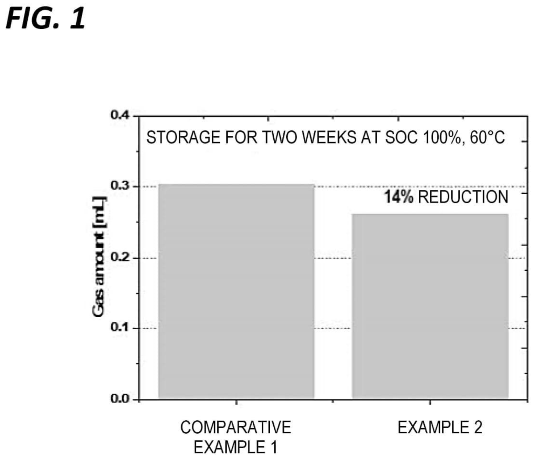

FIG. 1 is a graph illustrating results of comparative evaluation on gas generation amounts of lithium secondary batteries manufactured using positive electrode active materials of Comparative Example 1 and Example 2.

### DETAILED DESCRIPTION

Terms or words used in the present specification and claims should not be limitedly construed as usual or dictionary meanings, and should be interpreted as meanings and concepts consistent with the technical idea of the present disclosure on the basis of the principle that the inventor can appropriately define the concepts of the terms in order to explain his/her own invention in the best way.

In the present specification, it should be understood that the terms such as "include", "provided" or "have" are intended to specify the presence of implemented features, numbers, steps, components, or combinations thereof, but do not preclude possibilities of presence or addition of one or more other features, numbers, steps, components, or combinations thereof, in advance.

"About", "approximately", and "substantially" used in the present specification are used to mean ranges of numerical values or degrees or approximations thereto, taking into account inherent manufacturing and material tolerances.

A lithium transition metal oxide such as a lithium cobalt oxide, a lithium nickel oxide or a lithium nickel-cobalt-manganese composite oxide is mainly used as a positive electrode active material of a lithium secondary battery, and in order to lower the manufacturing cost of the positive electrode active material and increase the energy density, the capacity, and the like, a lithium-excess manganese-rich oxide is attracting attention. The lithium-excess manganese-richoxide may have a relatively low manufacturing cost because the content of manganese(Mn) that is relatively inexpensive and buried in an abundant amount is increased, and the content of cobalt (Co) is decreased.

The lithium-excess manganese-rich oxide may exist in a state where a lithium manganese oxide phase (Li₂MnO₃) having a rock salt structure and a lithium metal oxide phase (LiMO₂; M: at least one type of metal element including manganese) having a layered structure are mixed in a positive electrode of a lithium secondary battery. Here, due to the presence of the rock salt structure phase, the molar ratio of the content of lithium may be greater than per unit mole of metal such as manganese. Thus, the positive electrode active material according to the present disclosure may have a greater energy density than a conventional positive electrode active material.

In the meantime, when an initial activation process is performed on the lithium secondary battery containing the lithium-excess manganese-rich oxide, a large amount of gas may be generated. This may cause problems such as a decrease in the secondary battery capacity and a decrease in the cell stability.

One embodiment of the present disclosure provides a lithium-excess manganese-rich oxide-based positive electrode active material capable of reducing the amount of gas generated during the activation process, and the like, of the secondary battery, and improving the energy density and capacity characteristics, and the like.

Hereinafter, descriptions will be made on a positive electrode active material according to an embodiment of the disclosure, and a positive electrode and a lithium secondary battery including the same.

According to an embodiment of the disclosure, a positive electrode active materialis provided including a first phase containing a lithium manganese oxide with a rock salt structure; and a second phase containing a lithium metal oxide of Formula 1 with a layered structure, in a mixed state,
in which in the positive electrode active material, the content of manganese accounts for about 50 mol% or more of the total content of metals contained in the positive electrode active material, excluding lithium, and
niobium (Nb) which is additionally doped on the positive electrode active material is further included in an amount of about 2,000 ppm to 9,500 ppm based on the total content of the positive electrode active material:

   [Formula 1] Li[Ni_{1-b-c}Mn_{b}M_{c}]O₂
in Formula 1, b is about 0.4 or more and less than 1, c is about 0 to 0.2, and M is at least one selected from the group consisting of Al, B, W, Mg, V, Ti, Zn, Ga, In, Ru, Sn, Sr and Zr.

The positive electrode active material according to an embodiment of the disclosure corresponds to a manganese-rich oxide or a composite thereof in which the content of manganese accounts for about 50 mol% or more, about 50 mol% to 95 mol%, or about 50 mol% to 90 mol% of the total content of metals excluding lithium. Such a positive electrode active material of the embodiment includes a first phase containing a lithium manganese oxide with a rock salt structure, for example, Li₂MnO₃, and a second phase containing a lithium metal oxide of Formula 1 with a layered structure, for example, Li[Ni_{1-b-c}Mn_{b}M_{c}]O₂, and the first phase and the second phase may exist in a mixed or mutually combined state in the positive electrode active material. Here, due to the presence of the first phase in which the molar ratio of the content of lithium is greater than metals such as manganese, the positive electrode active material of the embodiment may contain a relatively large amount of lithium, and thus may have a higher energy density than an existing positive electrode active material.

Also, the positive electrode active material of the embodiment may be a so-called "cobalt-free" positive electrode active material that does not contain cobalt in the entire structure including the first phase and the second phase. According to this "cobalt-free" form, when the positive electrode active material of one embodiment isused, since the energy density can be increased while lowering the manufacturing cost of the positive electrode active material, it is possible to relatively reduce the manufacturing cost per unit energy.

However, in the positive electrode active material of an embodiment, due to the above-described characteristics such as excess lithium and rich manganese, although it is possible to increase the energy density, for example, lithium ions may be deintercalated from a transition metal oxide layer during an activation process, and the like, and the structure of the positive electrode may be changed. Also, the generation /deintercalation of oxygen radicals occurs through redox reactions of oxygen, and the like, and furthermore, gases such as CO, CO₂, or O₂ are generated through side reactions of electrolyte and decomposition of electrolyte, etc. Due to such gas generation, a decrease in capacity is caused by, for example, gas trap, and furthermore, cell stability is negatively affected.

In the meantime, in the positive electrode active material of an embodiment, doping element niobium (Nb) is included in a predetermined amount, for example, in an amount of about 2,000 ppm to 9,500 ppm, about 3,500 ppm to 8,000 ppm, or about 4,500 ppm to 5,500 ppm based on the total content of the positive electrode active material. Thus, the energy density and discharge capacity characteristics of the lithium secondary battery, particularly the discharge capacity characteristics at high temperatures, may be improved, and the gas generation amount may bereduced. It is predicted that this is because when niobium (Nb) is doped on the positive electrode active material, the crystal structure of the positive electrode active material may be further stabilized, and lithium ions may be more smoothly moved.

In the meantime, when the doping content is excessively small, for example, less than about 2,000 ppm, the improvement in the energy density and discharge capacity or the reduction of the gas generation amount may not be substantially exhibited. Otherwise, when the doping content is excessively large, for example, more than about 9,500ppm, it was confirmed that the discharge capacity is rather reduced, and then the effect of the doping of niobium (Nb) is not exhibited.

Meanwhile, the positive electrode active material of an embodiment basically includes nickel and manganese such that the total molar ratio of nickel: manganese becomes 1: 1 to 1: 5, or 1: 1 to 1: 4. Also, in Formula 1, b corresponding to the molar ratio of manganese may satisfy a range of about 0.4 or more and less than1, about 0.45 to 0.95, or about 0.5 to 0.9.

When this range is satisfied to include manganese at a relatively larger molar ratio, the positive electrode active material of an embodiment may maintain the structural stability of the entire positive electrode active material including the first phase and the second phase while exhibiting relatively high energy density and capacity characteristics.

In Formula 1, M may define an additional doping element other than niobium (Nb), and c may define the molar ratio of the additional doping element M. The type of the additional doping element is not particularly limited, and c may satisfy a range of about 0 to 0.2, or about 0 to 0.1. When the content of the additional doping element is excessively large, the capacity characteristics of the active material may be adversely affected, and furthermore, the gas generation amount may be increased due to, for example, an increase in the oxygen redox reaction.

Meanwhile, the positive electrode active material of an embodiment may exhibit high energy density and capacity characteristics by containing excess lithium based on the total moles of metals including nickel (Ni), manganese (Mn) and metal M other than lithium. For example, in the positive electrode active material, the ratio of the total moles of lithium may be greater than about 1 and 1.5 or less, about 1.1 to 1.4, or about 1.2 to 1.4 based on the total moles of metals other than lithium. In this way, by containing excess lithium, energy density and capacity characteristics may be excellently expressed. However, when the molar ratio of lithium becomes excessively large, the ratio of the first phase having the rock salt structure may be excessively increased, thereby decreasing the structural stability of the positive electrode active material and accelerating the degradation rate.

Also, thepositive electrode active material of an embodiment may include the first phase having the rock salt structure and the second phase having the layered structure at a molar ratio of about 1: 9 to 5: 5, or about 2: 8 to 4: 6. Due to the content ratio of the first phase to the second phase, the positive electrode active material may exhibit overall structural stability while having excellent energy density and capacity characteristics by containing excess lithium.

The positive electrode active material of an embodiment, which exhibits the above-described overall characteristics, may contain a lithium metal oxide composite of the following Formula 2 in an example, in which niobium (Nb) which is additionally doped on such a lithium metal oxide composite may be included in an amount of about 3,500 ppm to 8,000 ppm based on the total content of the positive electrode active material:

[Formula 2] X{Li₂MnO₃}·(1-X){Li[Ni_{1-b-c}Mn_{b}M_{c}]O₂}

in Formula 2, X is about 0.1 to 0.5, b is about 0.45 to 0.95, c is about 0 to 0.2, and M is at least one selected from the group consisting of Al, B, W, Mg, V, Ti, Zn, Ga, In, Ru, Sn, Sr and Zr.

Also, the positive electrode active material may further include a coating layer formed on the lithium metal oxide composite when necessary. When the positive electrode active material includes the coating layer, contact with an electrolyte is suppressed, so that side reactions may be reduced and the gas generation amount may be further reduced.

The coating layer may contain a coating element M1, and the coating element M1 may be, for example, at least one selected from the group consisting of Al, B, Co, W, Mg, V, Ti, Zn, Ga, In, Ru, Sn, Sr and Zr, or, for example, Al, Co, W or a combination thereof. Such a coating element may be present in the oxide form within the coating layer, for example, M1Oz(1≤z≤4).

Also, the coating layer may be formed to cover about 10% to 100%, about 30% to 100%, or about 50% to 100% based on the total surface area of the positive electrode active material, for example, the lithium metal oxide composite particles, so that the life characteristics of the positive electrode active material may be further improved.

Meanwhile, in order to prepare the above-described positive electrode active material, a precursor may be prepared by mixing and firing metal precursors such as nickel, manganese and M, and then a niobium precursor and a lithium raw material may be additionally mixed and fired.

In such a production method, as for the lithium raw material, for example, lithium-containing carbonate (e.g., lithium carbonate, and the like), hydrate (e.g., lithium hydroxide hydrate (LiOH·H₂O),etc.), hydroxide (e.g., lithium hydroxide, and the like), nitrate (e.g., lithium nitrate (LiNO₃), and the like), and chloride (e.g., lithium chloride (LiCl), and the like) may be used, and among these, either one type may be used alone or a mixture of two or more types may be used.

Also, the metal precursor such as nickel, manganese, M or niobium (Nb) may have a form of hydroxide, oxide or carbonate. When the precursor in the carbonate form is used, it is possible to prepare the positive electrode active material having a relatively high specific surface area.

The individual metal precursors and the lithium raw material may be mixed according to the molar ratio of each element defined in Formula 2, and the like, and then each firing step may be performed. The firing step may be performed at a temperature of about 600°C to 1,000°C or about 700°C to 950°C, and the firing time may be about 5 h to 30 h or about 5 h to 20 h. Also, the firing atmosphere may be an air atmosphere or an oxygen atmosphere, for example, an atmosphere containing about 20 vol% to 100 vol% of oxygen.

Meanwhile, since the positive electrode active material of an embodiment may be manufactured, for example, according to a general manufacturing process of positive electrode active material and conditions for the lithium metal oxide form, additional descriptions thereof will beomitted.

Meanwhile, according to another embodiment of the disclosure, a positive electrode for a lithium secondary battery is provided. The positive electrode includes: a positive electrode current collector; and a positive electrode active material layer formed on the positive electrode current collector and containing the above-described positive electrode active material of an embodiment, a binder, and a conductive material.

In the positive electrode of another embodiment, the positive electrode current collector is not particularly limited, as long as it has high conductivity without causing a chemical change in the battery. For example, copper, stainless steel, aluminum, nickel, titanium, calcined carbon, copper or stainless steel whose surface is treated with carbon, nickel, titanium, silver, and the like, and an aluminum-cadmium alloy may beused. Also, the positive electrode current collector may generally have a thickness of about 3 µm to 500 µm, and may have, for example, various forms such as a film, a sheet, a foil, a net, a porous body, a foam, and a non-woven fabric.

Also, in the positive electrode active material layer, examples of the conductive material may include: spherical or flaky graphite; carbon-based materials such as carbon black, acetylene black, Ketjen black, channel black, furnace black, lamp black, thermal black, carbon fiber, single-walled carbon nanotube, and multi-walled carbon nanotube; metal powder or metal fiber of copper, nickel, aluminum, silver, and the like; conductive whiskers of zinc oxide, potassium titanate, and the like; conductive metal oxides such as titanium oxide; and conductive polymers such as a polyphenylene derivative, and among these, one type may be used either alone or a mixture of two or more types may be used. The conductive material may be contained in an amount of about 0.1% to 20% by weight, about 1% to 20% by weight, or about 1% to 10% by weight based on the total weight of the positive electrode active material layer.

Also, examples of the binder may include polyvinylidene fluoride(PVDF), polyvinylidene fluoride-hexafluoropropylene copolymer (PVDF-co-HFP), polyvinylalcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluororubber, and various copolymers thereof, and among these, either one type may be used alone or a mixture of two or more types may be used. The binder may be contained in an amount of about 0.1% to 20% by weight, about 1% to 20% by weight, or about 1% to 10% by weight based on the total weight of the positive electrode active material layer.

In addition, in the positive electrode active material layer, the positive electrode active material of an embodiment may be contained in an amount of about 80% to 99% by weight based on the total weight.

Except the fact that the positive electrode active material of the embodiment is contained, the positive electrode of another embodiment may be manufactured according to a general manufacturing process of positive electrode, for example, a method in which a slurry composition is prepared by mixing the above-described individual components in a solvent, and then is applied, dried and roll-pressed on the positive electrode current collector.

Meanwhile, according to an additional embodiment of the disclosure, a lithium secondary battery is provided including the positive electrode, a negative electrode, and an electrolyte. Since the above-described positive electrode active material of the embodiment is contained, this lithium secondary battery may exhibit a reduced gas generation amount during the progress of an activation process, and the like, and may have improved discharge capacity characteristics, and the like.

In the lithium secondary battery, the negative electrode includes a negative electrode current collector and a negative electrode active material layer disposed on the negative electrode current collector.

Here, the negative electrode current collector is not particularly limited as long as the negative electrode current collector has relatively high conductivity without causing a chemical change in the battery. For example, copper, stainless steel, aluminum, nickel, titanium, calcined carbon, copper, or stainless steel whose surface is treated with carbon, nickel, titanium, silver, and the like, and an aluminum-cadmium alloy may be used. In addition, the thickness and shape of the negative electrode current collector may be the same as or corresponding to those of the positive electrode current collector.

Also, the negative electrode active material layer optionally includes a binder and a conductive material together with the negative electrodeactive material.

As for the negative electrode active material, a compound through which lithium can be reversibly intercalated and deintercalated may be used. Examples thereof may include: a carbonaceous material such as artificial graphite, natural graphite, graphitized carbon fiber, and amorphous carbon; a metallic material that can be alloyed with lithium such as Si, Al, Sn, Pb, Zn, Bi, In, Mg, Ga, Cd, Si alloy, Sn alloy or Al alloy; a metal oxide by which lithium can be doped or undoped such as SiOβ (0 <β< 2), SnO₂, vanadium oxide, and lithium vanadium oxide; and a composite containing the metallic material and the carbonaceous material such as an Si-C composite or an Sn-C composite, and then any one of these or a mixture of two or more may be used. Also, as for the negative electrode active material, a metal lithium thin film may also be used. The negative electrode active material may be included in an amount of about 80% to 99% by weight based on the total weight of the negative electrode active material layer.

Meanwhile, in the negative electrode active material layer, the types and content ranges of the binder and the conductive material may be the same as or substantially the same as those described for the positive electrode active material layer, and thus additional descriptions thereof will be omitted.

Also, the negative electrode active material layer and the negative electrode may be manufactured through a method in which a slurry composition is prepared by mixing the above-described individual components of the negative electrode active material, the binder and the conductive material in a solvent and then is applied, dried and roll-pressed on the negative electrode current collector. In the manufacturing of another example, a negative electrode mixture including the negative electrode active material, the binder and the conductive material may be cast on a separate support, and then a film obtained through exfoliation from the support may be laminated on the negative electrode current collector.

Meanwhile, as for the electrolyte of the lithium secondary battery, an organic liquid electrolyte, an inorganic liquid electrolyte, a polymer solid electrolyte, a gel-type polymer electrolyte, an inorganic solid electrolyte or a melted inorganic electrolyte, which can be used in manufacturing the secondary battery, may be used.

As an example, the electrolyte may be a liquid electrolyte containing an organic solvent and a lithium salt.

The organic solvent may be used without any particular limitation as long as the organic solvent can serve as a medium through which ions involved in the electrochemical reaction of the battery are movable. For example, as for the organic solvent, it is possible to use ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohol-based solvents such as ethyl alcohol, and isopropyl alcohol; nitriles such as R-CN (R is a linear, branched or cyclic hydrocarbon group having 2 to 20 carbon atoms, and may include a double bond aromatic ring or an ether bond); amides such as dimethylformamide; dioxolanes such as 1,3-dioxolane; or sulfolanes.

Among these, the carbonate-based solvent may be appropriately used, and a mixture of a cyclic carbonate having relatively high ion conductivity and relatively high dielectric constant, which may improve charge/discharge performance of a battery (e.g.,ethylene carbonate or propylene carbonate), and a linear carbonate-based compound having low viscosity (e.g., ethylmethyl carbonate, dimethyl carbonate or diethyl carbonate) may be used.

The lithium salt may be used without any particular limitation as long as the lithium salt is a compound capable of providing lithium ions used in the lithium secondary battery. For example, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻. For example, as for the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used.

Also, the lithium salt may be used at a concentration falling within a range of about 0.1 M to 4.0 M in the liquid electrolyte. When the concentration of the lithium salt falls within the above range, since the electrolyte has appropriate conductivity and viscosity, excellent electrolyte performance may be exhibited, and lithium ions may be effectively moved.

In addition to the electrolyte components, for the purpose of improving battery life characteristics, suppressing battery capacity reduction, and improving battery discharge capacity, the electrolyte may further include one or more types of additives such as, for example, a haloalkylene carbonate-based compound such as difluoro ethylene carbonate, pyridine, triethylphosphite, triethanolamine, cyclic ether, ethylenediamine, n-glyme, hexaphosphoric acid triamide, nitrobenzene derivative, sulfur, quinoneimine dye, N-substituted oxazolidinone, N,N-substituted imidazolidine, ethylene glycol dialkyl ether, ammonium salt, pyrrole, 2-methoxy ethanol or aluminum trichloride. Here, the additive may be included in an amount of about 0.1% to 5% by weight based on the total weight of the electrolyte.

Meanwhile, the above-described lithium secondary battery may further include a separator that separates the negative electrode from the positive electrode, and provides a movement passage for lithium ions. As for such a separator, a porous polymer film having relatively low resistance to ion movement of the electrolyte and excellent electrolyte moisture retention capacity, or a stacked structure of two or more layers thereof may be used. For example, the porous polymer film may be produced using a polyolefin-based polymer such as an ethylene homopolymer, a propylene homopolymer, an ethylene/butene copolymer, an ethylene/hexene copolymer or an ethylene/methacrylate copolymer. Also, a conventional porous non-woven fabric, for example, a non-woven fabric made of relatively high melting point glass fiber, polyethylene terephthalate fiber, and the like, may also be used.

Also, a coated separator containing ceramic components or polymer materials may also be used so as to ensure heat resistance or mechanical strength, and may be optionally used with either a single-layer or multi-layer structure.

The external shape of the lithium secondary battery is not particularly limited, but may be a cylindrical shape using a can, a prismatic shape, a pouch shape or a coin shape.

The above-described lithium secondary battery may exhibit excellent energy density and discharge capacity characteristics, and a reduced gas generation amount because the positive electrode active material of one embodiment is contained. For example, when the lithium secondary battery is stored for two weeks under conditions of SOC (State of Charge) 100% and 60°C, a relatively small gas generation amount of about 0.29 mL or less, or 0.25 mL or less may be exhibited.

Therefore, the lithium secondary battery is useful in the fields of portable devices such as mobile phones, laptop computers, and digital cameras, and electric vehicles (EVs) such as hybrid electric vehicles (HEVs).

Accordingly, the lithium secondary battery may be used for battery cells used as power sources for small sized devices, and furthermore, may also be used as a unit battery in medium-to-large sized battery modules each including a plurality of battery cells.

Examples of the medium-to-large sized devices may include electric vehicles (EVs), hybrid electric vehicles (HEVs), plug-in hybrid electric vehicles (HEVs) and power storage systems, but are not limited thereto.

Hereinafter, Examples of the disclosure will be described in detail so that a person with ordinary skill in the technical field to which the disclosure belongs may readily implement the disclosure. However, the present disclosure may be implemented in various forms, and is not limited by Examples described herein.

### Comparative Example 1: Preparation of 0.3 {Li₂MnO₃}·0.7{Li[Ni_{0.5}Mn_{0.5}]O₂}

Ni_{0.35}Mn_{0.65}(OH)₂ and lithium hydroxide (LiOH) were input to a Henschel mixer (700L) such that the molar ratio of Li: transition metal (Ni+Mn) became 1.3: 1, and were mixed at 300 rpm for 20 min. The mixed powder was input to an alumina crucible having a size of 330 mm × 330 mm, and was fired at 850°C for 10 h in an oxygen atmosphere to prepare a positive electrode active material of Comparative Example 1.

### Example 1: Preparation of Nb (2,500 ppm)-doped 0.3{Li₂MnO₃}·0.7{Li[Ni_{0.5}Mn_{0.5}]O₂}

Ni_{0.35}Mn_{0.65}(OH)₂ and lithium hydroxide (LiOH) were input to a Henschel mixer (700L) such that the molar ratio of Li: transition metal (Ni+Mn) became 1.3: 1, and were mixed at 300 rpm for 20 min. During this mixing process, niobium oxide(NbO) was additionally mixed such that the content of niobium (Nb) became 2,500 ppm based on a final positive electrode active material.

The mixed powder was input to an alumina crucible with a size of 330 mm × 330 mm, and was fired at 850°C for 10 h in an oxygen atmosphere to prepare a positive electrode active material of Example 1.

### Example 2: Preparation of Nb (5,000 ppm)-doped 0.3 {Li₂MnO₃}·0.7{Li[Ni_{0.5}Mn_{0.5}]O₂}

Ni_{0.35}Mn_{0.65}(OH)₂ and lithium hydroxide (LiOH) were input to a Henschel mixer (700L) such that the molar ratio of Li: transition metal (Ni+Mn) became 1.3: 1, and were mixed at 300 rpm for 20 min. During this mixing process, niobium oxide (NbO) was additionally mixed such that the content of niobium (Nb) became 5,000 ppm based on a final positive electrode active material.

The mixed powder was input to an alumina crucible with a size of 330 mm × 330 mm, and was fired at 850°C for 10 h in an oxygen atmosphere to prepare a positive electrode active material of Example 2.

### Example 3: Preparation of Nb (9,000ppm)-doped 0.3{Li₂MnO₃}·0.7{Li[Ni_{0.5}Mn_{0.5}]O₂}

Ni_{0.35}Mn_{0.65}(OH)₂ and lithium hydroxide (LiOH) were input to a Henschel mixer (700L) such that the molar ratio of Li: transition metal (Ni+Mn) became 1.3: 1, and were mixed at 300 rpm for 20 min. During this mixing process, niobium oxide (NbO) was additionally mixed such that the content of niobium (Nb) became 9,000 ppm based on a final positive electrode active material.

The mixed powder was input to an alumina crucible with a size of 330 mm × 330 mm, and was fired at 850°C for 10 h in an oxygen atmosphereto prepare a positive electrode active material of Example 3.

### Production Example: Production of lithium secondary battery

The positive electrode active material of Example or Comparative Example, single-walled carbon nanotubes, and a PVDF binder were mixed at a weight ratio of 96.0: 1.0: 3.0 in N-methylpyrrolidone to produce apositive electrode slurry. The positive electrode slurry was coated, dried, and roll-pressed on an aluminum current collector sheet to produce a positive electrode.

A [0012] graphite negative electrodeactive material, single-walled carbon nanotubes, styrene-butadiene rubber (SBR), and carboxymethyl cellulose (CMC) were mixed at a weight ratio of 96.2: 0.8: 2: 1 in water to produce a negative electrode slurry. The negative electrode slurry was coated, dried, and roll-pressed on a copper current collector sheet to produce a negative electrode.

Meanwhile, the positive electrode and the negative electrode were produced such that the ratio of the negative electrode discharge capacity to the positive electrode discharge capacity (N/P ratio) became 115%, through adjustment of a loading amount.

An electrode assembly was produced by interposing a polyethylene separator between the positive electrode and the negative electrode produced as described above. The electrode assembly was inserted into a battery casing, and an electrolyte was injected. Then, an activation process was carried out at 45°C through charging to 4.6V at a constant current of 0.1C and then discharging to 2.0V at a constant current of 0.1C so as to produce a lithium secondary battery.

### Experimental Example 1: Evaluation of gas generation amount

When lithium secondary batteries manufactured using the positive electrode active materials of Example 2 and Comparative Example 1 were stored for two weeks under conditionsof SOC (State of Charge) 100% and 60°C, the gas generation amounts were evaluated. The gas generation amount was measured and evaluated using gas chromatography, and the evaluation results are illustrated inFIG. 1.

Referring to FIG. 1, it was confirmed that the gas generation amount exhibited by the lithium secondary battery manufactured using Example 2 was reduced by about 14% compared to that of the battery manufactured from Comparative Example 1.

### Experimental Example 2: Evaluation of electrochemical characteristics

A charging/discharging test was performed in a voltage range of 4.4 V to 2.5 V under conditions of 25°C, for a c-rate of 0.1C and 0.33C, on the lithium secondary battery manufactured by the positive electrode active material of Example or Comparative Example. From the results of these charging/discharging tests, the discharge capacity, the average voltage and the energy density were individually evaluated, and the evaluation results are noted in Tables 1 and 2 below. Table 1 illustrates results of the comparative evaluation on the average voltage and the energy density for the batteries of Example 2 and Comparative Example 1, and Table 2 illustrates results of the comparative evaluation on the discharge capacity for the batteries of Examples 1 to 3.

Here, in order to calculate the energy density, a value obtained by multiplying the discharge capacity by the average voltage was divided by unit volume of the secondary battery, and the average voltage was calculated as a value obtained by dividing the curve integral value of the capacity-voltage profile, by the capacity.

**[Table 1]**

| | | Example 2 | Comparative Example 1 |
|---|---|---|---|
| Average voltage (V) | 0.1C | 3.646 | 3.645 |
| | 0.33C | 3.644 | 3.640 |
| Energy density (mWh/g) (average voltage x discharge capacity) | 0.1C | 836.11 | 831.68 |
| | 0.33C | 809.67 | 802.40 |

**[Table 2]**

| | | Example 1 | Example 2 | Example 3 |
|---|---|---|---|---|
| Discharge capacity (mAh/g) | 0.1C | 228.8 | 229.2 | 227.4 |
| | 0.33C | 220.6 | 221.8 | 219.3 |
| De-rating (0.33C/0.1C;%) | | 96.4 | 96.8 | 96.4 |

Referring to Table 1 above, it was confirmed that the battery manufactured from Example 2 exhibited a relatively high energy density compared to Comparative Example 1, and it was confirmed that the difference in the energy density was larger at a higher discharge rate. For example, a higher energy density per weight means that a lighter battery can be made in an actual battery because a relatively high energy can be produced even with a relatively small amount of active material.

Also, referring to Table 2 above, it was confirmed that the battery manufactured by the positive electrode active material of Example exhibited a relatively high discharge capacity. Particularly, it was confirmed that the discharge capacity was maximized in Example 2 in which niobium (Nb) was doped at 5,000 ppm. Also, the de-rating value is the value of the 0.33C capacity/0.1C capacity ratio expressed as %. Here, C is the C rate value and indicates the charge/discharge rate of the battery. When the C-rate is 0.1C, the time used for charging/discharging the battery is 10 h, and when the C-rate is 0.33C, the time used for charging/discharging the battery is about 3 h. This means that as the C rate value increases, a faster charge/discharge rate is possible, and means that the use is advantageous even in a status where a relatively high current is momentarily required. This means that as % of discharge capacity expressed at 0.33C/discharge capacity expressed at 0.1C approaches 100%, charging/discharging is possible at a higher speed. This means that when niobium (Nb) is added at 5,000 ppm, charging/discharging can be performed at a high speed.

From Table 1, it was confirmed that the energy density was improved, and from Table 2, it was confirmed that the de-rating value was improved through addition of 5,000ppm. On the basis of this, it can be found that when niobium(Nb) is added at an appropriate level, it is possible to make a light battery with improved energy density, and to perform charging/discharging at a high speed. It is thought that these conditions will be used more advantageously in the case of the use as a battery used for electric vehicles.

Although descriptions have been made above with reference to Examples of the present disclosure, a person skilled in the relevant technical field or a person with ordinary skill in the relevant technical field will understand that various modifications and changes can be made to the present disclosure within a scope not departing from the spirit and technical area of the present disclosure described in the patent claims to be described later. Therefore, the technical scope of the present disclosure is not limited to the contents described in the detailed description of the specification, but should be determined by the patent claims.

## Claims

1. A positive electrode active material comprising:
a first phase containing a lithium manganese oxide with a rock salt structure; and
a second phase containing a lithium metal oxide of Formula 1 with a layered structure, in a mixed state,
wherein in the positive electrode active material, the content of manganese accounts for 50 mol% or more of a total content of metals contained in the positive electrode active material, excluding lithium, and
niobium (Nb) which is additionally doped on the positive electrode active material is further included in an amount of 2,000 ppm to 9,500 ppm based on a total content of the positive electrode active material:
[Formula 1] Li[Ni_{1-b-c}Mn_{b}M_{c}]O₂
wherein b is 0.4 or more and less than 1, c is 0 to 0.2, and M is at least one selected from the group consisting of Al, B, W, Mg, V, Ti, Zn, Ga, In, Ru, Sn, Sr and Zr.

2. The positive electrode active material according to claim 1, wherein the first phase contains a lithium manganese oxide represented by Li₂MnO₃.

3. The positive electrode active material according to claim 1, wherein the first phase and the second phase are included at a molar ratio of 1: 9 to 5: 5.

4. The positive electrode active material according to claim 1, wherein a ratio of total moles of lithium contained in the positive electrode active material is greater than 1 and 1.5 or less based on total moles of nickel (Ni), manganese (Mn) and metal M contained in the positive electrode active material.

5. The positive electrode active material according to claim 1, wherein a total molar ratio of nickel (Ni): manganese (Mn) contained in the positive electrode active material is 1: 1 to 1: 5.

6. The positive electrode active material according to claim 1, further comprising a lithium metal oxide composite of Formula 2 below,
wherein the niobium (Nb) is contained in an amount of 3,500 ppm to 8,000 ppm based on the total content of the positive electrode active material:
[Formula 2] X{Li₂MnO₃}·(1-X){Li[Ni_{1-b-c}Mn_{b}M_{c}]O₂}
wherein X is 0.1 to 0.5, b is 0.45 to 0.95, c is 0 to 0.2, and M is at least one selected from the group consisting of Al, B, W, Mg, V, Ti, Zn, Ga, In, Ru, Sn, Sr and Zr.

7. A positive electrode for a lithium secondary battery, the positive electrode comprising:
a positive electrodecurrent collector; and
a positive electrode active material layer formed on the positive electrode current collector and containing the positive electrode active material according to one of claims 1 to 6, a binder and a conductive material.

8. A lithium secondary battery comprising the positive electrode according to claim 7, a negative electrode, and an electrolyte.

9. The lithium secondary battery according to claim 8, wherein a gas generation amount is 2.9mL or less after storage for two weeks under conditions of SOC (State of Charge) 100% and 60°C.
